# EUROPÄISCHE PATENTSCHRIFT

(11) **EP 1 796 948 B1**
(45) Veröffentlichungstag und Bekanntmachung des Hinweises auf die Patenterteilung: **19.03.2008**
(21) Anmeldenummer: 05782848.5
(22) Anmeldetag: 18.08.2005
(51) Int. Cl.: B62D 5/065, B62D 5/07

(54) **LENKHILFESYSTEM**
STEERING BOOST SYSTEM
SYSTEME D'ASSISTANCE DE DIRECTION

(30) Priorität: 28.09.2004 DE 102004047521
(43) Veröffentlichungstag der Anmeldung: 20.06.2007
(73) Patentinhaber: ixetic Bad Homburg GmbH, 61352 Bad Homburg v. d. H. (DE)
(72) Erfinder: WEBERT, Dirk, 61350 Bad Hamburg (DE); VAN NGUYEN, Doan, 61267 Neu-Anspach (DE)
(86) Internationale Anmeldenummer: PCT/DE2005/001451
(87) Internationale Veröffentlichungsnummer: WO 2006/034665

(56) Entgegenhaltungen:
- EP-A- 0 210 930
- DE-A1- 19 701 859
- DE-A1- 19 834 481
- DE-C- 929 530
- PATENT ABSTRACTS OF JAPAN Bd. 010, Nr. 385 (M-548), 24. Dezember 1986 (1986-12-24) -& JP 61 175174 A (UCHIDA YUATSU KIKI KOGYO KK), 6. August 1986 (1986-08-06)

## Beschreibung

Die Erfindung betrifft ein hydraulisches Lenkhilfesystem (Servolenkung) für Kraftfahrzeuge mit einer Lenkhelfpumpe und einem veränderbaren Übersetzungsgetriebe, insbesondere einem Hochtrieb für die Lenkhelfpumpe. Dabei wird im Stand der Technik das Übersetzungsgetriebe durch einen elektrischen Antrieb verstellt, was den Nachteil hat, dass das Bordnetz des Kraftfahrzeuges stark belastet wird und die Stellglieder langsam arbeiten und relativ groß bauen.

Weiterhin ist im Stand der Technik (EP-A-0210930) ein hydraulisches Lenkhilfesystem für Kraftfahrzeuge mit einer Lenkhelfpumpe und einem veränderbaren Übersetzungsgetriebe, insbesondere einem Hochtrieb für die Lenkhelfpumpe bekannt, wobei die Lenkhelfpumpe das hydraulische Lenkhilfesystem mit hydraulischer Leistung versorgt. Das Dokument gibt keinen Hinweis darauf, wie das veränderbare Übersetzungsgetriebe zwischen Verbrennungsmotor und Lenkhelfpumpe angesteuert oder geregelt oder mit Leistung versorgt wird.

Es ist daher Aufgabe der Erfindung, eine Verstelleinrichtung für das Übersetzungsgetriebe zu schaffen, die diese Nachteile nicht aufweist.

Die Aufgabe wird gelöst durch ein hydraulisches Lenkhilfesystem (Servolenkung) für Kraftfahrzeuge mit einer Lenkhelfpumpe und einem veränderbaren Übersetzungsgetriebe, insbesondere einem Hochtrieb für die Lenkhelfpumpe, wobei die Lenkhelfpumpe sowohl das hydraulische Lenkhilfesystem als auch ein hydraulisches System des Übersetzungsgetriebes mit hydraulischer Leistung versorgt. Erfindungsgemäß ist das hydraulische System des Übersetzungsgetriebes zwischen der Lenkhelfpumpe und einer Stromregelventileinrichtung für das Lenkhilfesystem hydraulisch angeschlossen.

Eine erfindungsgemäße Ausführung des hydraulischen Lenkhilfesystem zeichnet sich dadurch aus, dass das hydraulische System des Übersetzungsgetriebes mindestens eine Steuer-, Schalt- oder Regeleinrichtung, insbesondere ein Ventil oder eine Drossel, und eine hydraulische Verstelleinrichtung, insbesondere einen Motor oder einen Zylinder aufweist. Bevorzugt wird ein hydraulisches Lenkhilfesystem, bei dem der Zylinder entweder einfach oder doppelt wirkend ausgeführt sein kann.

Weiterhin wird ein Lenkhilfesystem bevorzugt, bei welchem zusätzlich ein Positions- oder Drehzahlsensor für die hydraulische Verstelleinrichtung des Übersetzungsgetriebes vorgesehen ist. Das hat den Vorteil, dass die Übersetzung des Übersetzungsgetriebes in einem Regelkreis kontrolliert werden kann. Auch wird ein hydraulisches Lenkhilfesystem bevorzugt, bei welchem eine elektronische Regeleinrichtung für die Steuer-, Schalt- oder Regeleinrichtung vorgesehen ist.

Ein hydraulisches Lenkhilfesystem zeichnet sich dadurch aus, dass das hydraulische System des Übersetzungsgetriebes stromab der Lenkhelfpumpe parallel zum Lenkhilfesystem geschaltet ist. Dadurch ergibt sich, dass die Druckdifferenz des hydraulischen Systems des Übersetzungsgetriebes gleich der Druckdifferenz am Lenkhilfesystem ist, während der Volumenstrom der Pumpe auf beide Systeme aufgeteilt wird. Bevorzugt wird auch ein hydraulisches Lenkhilfesystem, bei welchem die Schalt-, Steuer- oder Regeleinrichtung des hydraulischen Systems des Übersetzungsgetriebes im Hauptstrom der Lenkhelfpumpe angeordnet ist. Weiterhin wird ein hydraulisches Lenkhilfesystem bevorzugt, bei welchem die Steuer-, Schalt- oder Regeleinrichtung in einem Bypassstrom (abgezweigter Nebenstrom) der Lenkhelfpumpe angeordnet ist. Das hat den Vorteil, dass die Steuer-, Schalt- oder Regeleinrichtung kleiner ausgeführt werden kann.

Ein weiteres erfindungsgemäßes hydraulisches Lenkhilfesystem zeichnet sich dadurch aus, dass das hydraulische System des Übersetzungsgetriebes stromab der Lenkhelfpumpe in Reihe mit dem Lenkhilfesystem geschaltet ist. Das hat den Vorteil, dass die Leistung der Verstelleinrichtung unabhängig vom Druck des Lenkhilfesystems gesteuert werden kann. Bevorzugt wird auch ein hydraulisches Lenkhilfesystem, bei welchem stromauf vor der Steuer-, Schalt- oder Regeleinrichtung ein Drucksensor angeordnet ist. Das hat den Vorteil, dass über den Drucksensor eine Druckbegrenzungsfunktion realisiert werden kann.

Ein hydraulisches Lenkhilfesystem zeichnet sich dadurch aus, dass die hydraulische Verstelleinrichtung des Übersetzungsgetriebes sich durch entsprechende Kräfte, insbesondere drucklos durch Federkräfte oder durch unterschiedlich große Druckwirkflächen bei Beaufschlagung mit dem gleichen Druck auf eine Minimaldrehzahl des Übersetzungsgetriebes zurückstellt. Auch wird ein hydraulisches Lenkhilfesystem bevorzugt, bei welchem das Übersetzungsgetriebe einen Hochtrieb darstellt, der bei niedriger Drehzahl des Verbrennungsmotors die Drehzahl der Lenkhelfpumpe heraufsetzt und umgekehrt bei hoher Drehzahl des Verbrennungsmotors die Drehzahl der Lenkhelfpumpe herabsetzt, vorzugsweise auf die gleiche Drehzahl wie die des Verbrennungsmotors.

Ein weiteres hydraulisches Lenkhilfesystem zeichnet sich dadurch aus, dass die Steuer-, Schalt- oder Regeleinrichtung des Übersetzungsgetriebes vorgesteuert ist. Das hat den Vorteil, dass für die Vorsteuerstufe kleinere Magneten verwendet werden können.

Auch wird ein hydraulisches Lenkhilfesystem bevorzugt, bei welchem die elektronische Regeleinrichtung für das Übersetzungsgetriebe zusätzliche Signale oder Fahrzustandsgrößen wie Drehzahl und/oder Lenkwinkelgeschwindigkeit und/oder Übersetzung des Lenkgetriebes und/oder Fahrgeschwindigkeit berücksichtigt bzw. auswertet.

Ein hydraulisches Lenkhilfesystem zeichnet sich weiterhin dadurch aus, dass bei einer Reihenschaltung des Lenkhilfesystems und der hydraulischen Verstelleinrichtung des Übersetzungsgetriebes die Steuer-, Schalt- oder Regeleinrichtung parallel zur Verstelleinrichtung geschaltet ist.

Die Erfindung wird nun anhand der Figuren beschrieben.

Figur 1 zeigt die Verstellung des Hochtriebs mit einem Hydrozylinder und Parallelschaltung zwischen Lenkhilfesystem und hydraulischem System des Übersetzungsgetriebes mit einem Ventil im Hauptstrom.

Figur 2 zeigt die Verstellung des Hochtriebs mit einem Hydrozylinder und mit Parallelschaltung zwischen Lenkhilfesystem und hydraulischem System des Übersetzungsgetriebes mit einem Ventil im Bypass.

Figur 3 zeigt die Verstellung des Hochtriebes mit einem Hydromotor und mit einer Reihenschaltung zwischen Lenkhilfesystem und hydraulischem Verstellsystem des Übersetzungsgetriebes mit einer Verstelldrossel.

Figur 4 zeigt die Verstellung des Hochtriebes mit einem Hydrozylinder und einer Reihenschaltung zwischen Lenkhilfesystem und hydraulischem System des Übersetzungsgetriebes mit einem Positionssensor für den Hydrozylinder.

Figur 5 zeigt die Verstellung des Hochtriebes mit einem Hydrozylinder und einer Reihenschaltung zwischen hydraulischem Lenkhilfesystem und hydraulischem System des Übersetzungsgetriebes, wobei die Verstelldrossel vorgesteuert ist.

Figur 6 zeigt eine Variante von Figur 5, bei welcher der Rücklauf vom Ventil 104 zum Lenkgetriebe geführt wird.

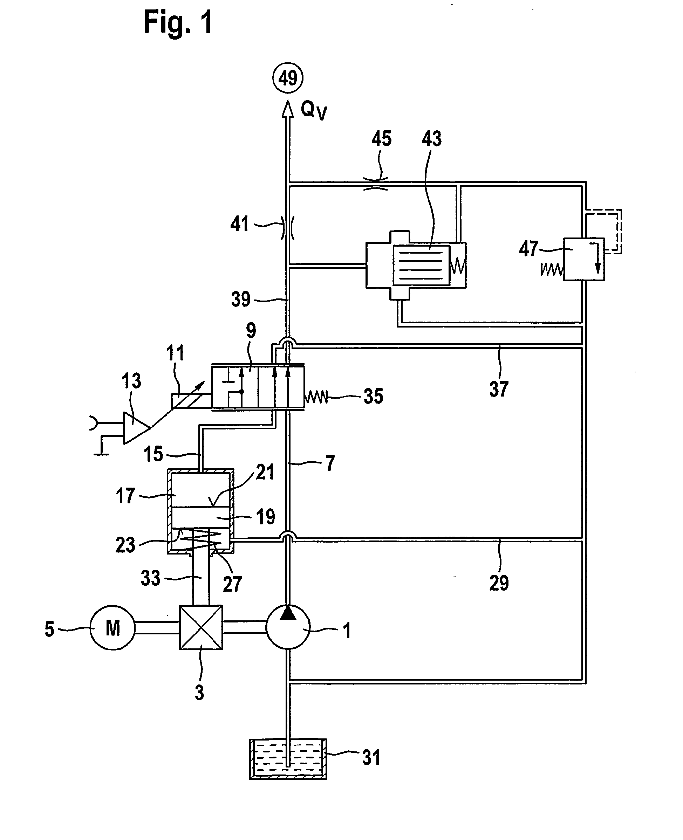

In Figur 1 ist die Verstellung des Hochtriebs mit einem Hydrozylinder dargestellt, wobei zwischen dem System des Hochtriebs und dem Lenkhilfesystem eine Parallelschaltung existiert. Eine Lenkhelfpumpe 1 ist über ein hydraulisch veränderbares Übersetzungsgetriebe 3, also dem Hochtrieb, mit einem Antriebsmotor 5, in der Regel dem Verbrennungsmotor, verbunden. Der Hochtrieb 3 soll bei niedrigen Drehzahlen des Verbrennungsmotors 5, beispielsweise im Leerlauf, und bei einem hohen Volumenstrombedarf der Servolenkung die Lenkhelfpumpe 1 mit einer höheren Drehzahl antreiben, damit ein entsprechender Volumenstrom für hohe Lenkwinkelgeschwindigkeiten der Servolenkung durch die Lenkhelfpumpe 1 realisiert werden kann. Bei höheren Drehzahlen des Verbrennungsmotors werden nur geringere Volumenströme der Lenkhelfpumpe 1 benötigt, so dass der Antrieb der Lenkhelfpumpe mit einer reduzierten Drehzahl erfolgen kann und daher der Hochtrieb 3 wieder entsprechend herunter geregelt werden kann. Dieser Zustand kann in den meisten Betriebspunkten des Kraftfahrzeuges hinreichend sein.

Die Lenkhelfpumpe 1 liefert über eine Verbindungsleitung 7 ihren Volumenstrom zu einer Ventileinrichtung 9. Die Ventileinrichtung 9 kann beispielsweise ein stufenlos verstellbares Ventil, wie z. B. ein Proportionalventil, aber auch ein pulsweitenmoduliert betätigtes Ventil oder gegebenenfalls sogar nur ein Schaltventil sein. Der Betätigungsmagnet 11 des Ventils 9 wird über einen elektronischen Regler 13 angesteuert. Das Ventil 9 ist weiterhin über eine Leitung 15 mit einem Hydrozylinder 17 verbunden, welcher die Verstelleinrichtung für den Hochtrieb 3 darstellt. Der Hydrozylinder besteht im Wesentlichen aus einem Kolben 19 mit einer großen Kolbenfläche 21, einer kleineren Kolbenringfläche 23 und einer Rückstellfeder 27. Es können gegebenenfalls aber auch andere Zylinderbauformen eingesetzt werden. Die große Kolbenfläche 21 ist mit der Leitung 15 an das Ventil 9 angeschlossen, die kleinere Ringfläche 27 ist über eine Leitung 29 mit dem Tank 31 verbunden. Somit kann auf der Ringfläche 23 kein Druck aufgebaut werden, sondern die Rückstellkraft gegen eine Druckkraft auf der Kolbenfläche 21 kann nur durch die Rückstellfeder 27 bewirkt werden. Der Zylinder 17 ist über eine Verbindungsstange 33 mit dem Hochtrieb 3 verbunden, in welchem in der Regel ein gewisser Exzenterverstellmechanismus von der Position "zentrisch" bis zur Position "maximal exzentrisch" verstellt wird. In der hier dargestellten Schaltstellung des Ventils 9, welche über eine Feder 35 gegen den in diesem Fall stromlosen Magnet 11 erreicht wird, ist die Verbindungsleitung 15 zum Zylinder 17 über eine Verbindungsleitung 37 ebenfalls drucklos mit dem Tank 31 verbunden. Die Verstelleinrichtung für den Hochtrieb 3 mit dem Zylinder 17 ist also in der drucklosen Position so geschaltet, dass die Drehzahl der Lenkhelfpumpe nicht ins hohe übersetzt wird, sondern gegebenenfalls gleich der Drehzahl des Verbrennungsmotors 5 ist. Sobald das Ventil 9 bzw. der Magnet 11 über die elektronische Regeleinrichtung 13 bestromt wird, schaltet das Ventil 9 gegen die Kraft der Feder 35 in die andere Position oder regelt eine entsprechende Zwischenposition so aus, dass die Verbindungsleitung 7 der Lenkhelfpumpe sowohl die Versorgungsleitung 15 des Hydrozylinders als auch eine weiterführende Leitung 39 zum Lenkhilfesystem 49 versorgt. Es folgt nun eine aus dem Stand der Technik bekannte Stromregeleinrichtung für Lenkhelfpumpen mit einer Hauptstromdrossel 41, an welcher eine Druckdifferenz zur Verstellung einer Druckwaage 43 erzeugt wird, wobei die Druckwaage 43 den für die Lenkung nicht benötigten Volumenstrom zum Tank 31 bzw. wieder in den Ansaugbereich der Pumpe 1 abströmen lässt. Weiterhin enthält die bekannte Stromregeleinrichtung für Servolenkungen eine Vorsteuerdrossel 45 und einen Druckbegrenzungspiloten 47, welche es ermöglichen, dass bei Erreichen eines maximalen Druckes aus dem Stromregelventilsystem ein vorgesteuertes Druckbegrenzungssystem wird und der komplette Volumenstrom der Lenkhelfpumpe 1 in den Tank 31 bzw. in den Ansaugbereich der Lenkhelfpumpe 1 zurückgeführt wird. Der Volumenstrom der Lenkhelfpumpe 1 teilt sich also auf in einen Verstellvolumenstrom für den Hydrozylinder 17 und in einen Versorgungsvolumenstrom QV, der zur Servolenkung 49 geführt wird. Erwähnenswert ist bei der Schaltung in Figur 1, dass das System des Hochtriebes 3, also der Zylinder 17, parallel zum Lenkhilfesystem 49 geschaltet ist und das Regelventil 9 in der Hauptstromleitung 7 der Lenkhelfpumpe 1 in einer Reihenschaltung vor dem Stromregelventilsystem 41, 43 angeordnet ist.

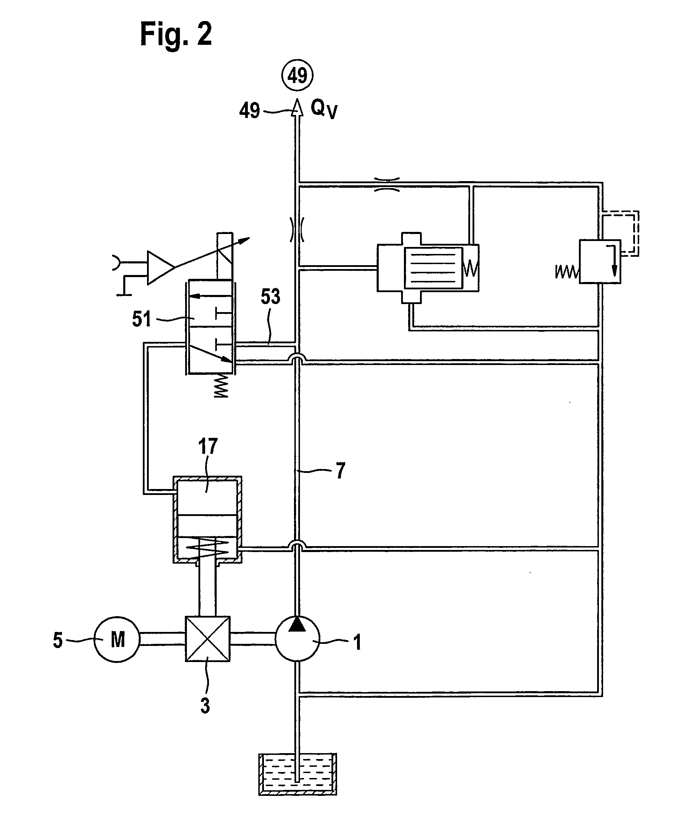

In Figur 2 ist eine andere Schaltung dargestellt, die sich prinzipiell in ihren meisten Elementen nicht von der Darstellung aus Figur 1 unterscheidet außer der Tatsache, dass hier ein Regelventil 51 in einem Bypasskanal 53 aus der Hauptstromleitung 7 angeordnet ist. Das bedeutet, dass das Ventil 51 nur für die Volumenstromgröße zur Versorgung des Verstellzylinders 17 ausgeführt sein muss, da der restliche Volumenstrom zur Lenkhilfe 49 nicht durch das Ventil 51, wie in Figur 1 durch das Ventil 9, strömen muss. Somit ist in dieser Schaltung die Verwendung eines kleineren Ventils 51 möglich. Alle anderen Elemente entsprechen in ihrer Funktion den Elementen aus Figur 1 und sollen zur Vermeidung von Wiederholungen nicht noch einmal beschrieben werden.

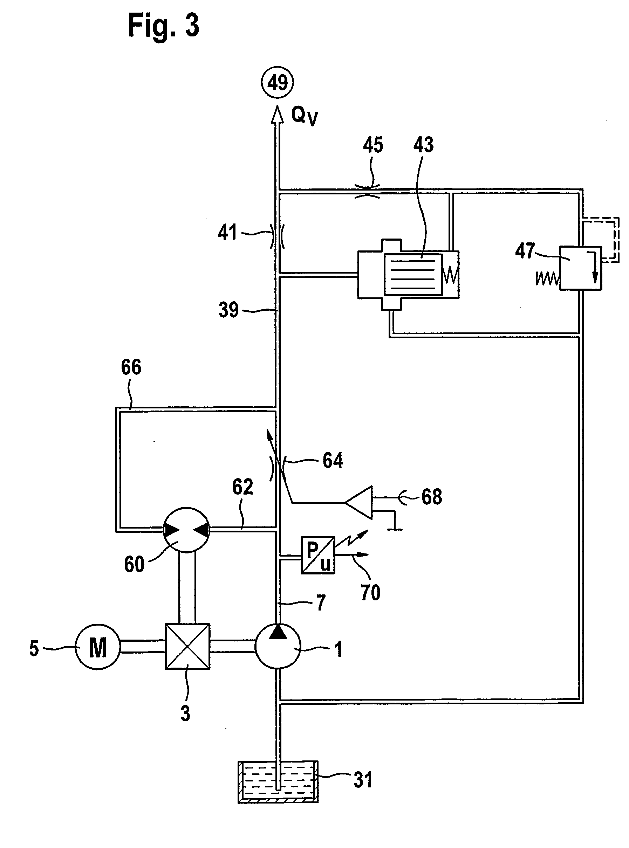

In Figur 3 ist eine Verstellung des Hochtriebes mit einem Hydromotor dargestellt, wobei in diesem Falle eine Reihenschaltung zwischen dem hydraulischen System des Hochtriebs und dem Lenkhilfesystem erfolgt. Das hydraulische System des Hochtriebes 3 zwischen dem Antriebsmotor 5 und der Lenkhelfpumpe 1 wird nun durch eine Drossel 64 und einen Hydromotor 60 dargestellt, welcher ggf. mittels hier nicht dargestellter Rückstelleinrichtungen in beiden Drehrichtungen betreibbar ist und über eine Verbindungsleitung 62 mit der Druckausgangsleitung 7 der Lenkhelfpumpe sowie über eine zweite Leitung 66 mit der Leitung 39 vor dem Stromregelventilsystem verbunden ist. In der Hauptleitung zwischen dem Leitungsabschnitt 7 und dem Leitungsabschnitt 39 ist eine verstellbare Drossel 64, beispielsweise ein Proportionaldrosselventil angeordnet, welches in diesem Falle auch von einer entsprechenden Steuerelektronik 68 verstellt werden kann. In diesem Fall ist also das System mit dem Hydromotor 60 und dem Verstellglied, nämlich der Verstelldrossel 64, in Reihe vor dem Stromregelventil 41, 43 hinter der Leitung 39 angeordnet, wobei der Volumenstrom am Stromregelventil 41, 43 dann zum Lenkhilfesystem 49 oder über die Druckwaage 43 zurück zum Tank 31 bzw. wieder in den Ansaugbereich der Pumpe 1 fließen kann. Im Gegensatz zu den in Figur 1 und 2 dargestellten Parallelschaltungen des hydraulischen Systems des Hochtriebs zum Lenkhilfesystem 49, bei welchem der Druck, der sich im Lenkhilfesystem 49 automatisch durch die an den Rädern wirkenden Kräfte einstellt, auch auf das Verstellsystem 17 des Hochtriebes 3 auswirkt, also der Druck des Lenkhilfesystems 49 gleich dem Druck des Verstellsystems 17 des Hochtriebes 3 ist, ergeben sich in der Schaltung in Figur 3 die Drücke der beiden Systeme derart, dass zu der Druckdifferenz des Systems mit dem Hydromotor 60 und der Verstelldrossel 64 der Druck im Lenkhilfesystem 49 sich addiert und beide Druckdifferenzen gemeinsam den Druck an der Pumpe 1 erzeugen. Vorteil dieser Schaltung ist dabei, dass unabhängig von der Druckdifferenz im Lenkhilfesystem 49 die notwendige Druckdifferenz zur Betätigung des Hydromotors 60 über die Verstelldrossel 64 eingestellt werden kann. Mittels eines Drucksensors 70 ist beispielsweise eine zusätzliche Absicherung des maximal Druckes dahingehend möglich, dass bei Überschreiten des maximalen Pumpendruckes die Verstelldrossel 64 voll öffnet, so dass keine weitere Druckdifferenz am System abfallen kann und dadurch das Druckbegrenzungsventil, bestehend aus Pilotventil 47 und Druckwaage 43, bei Maximaldruck aktiv werden kann.

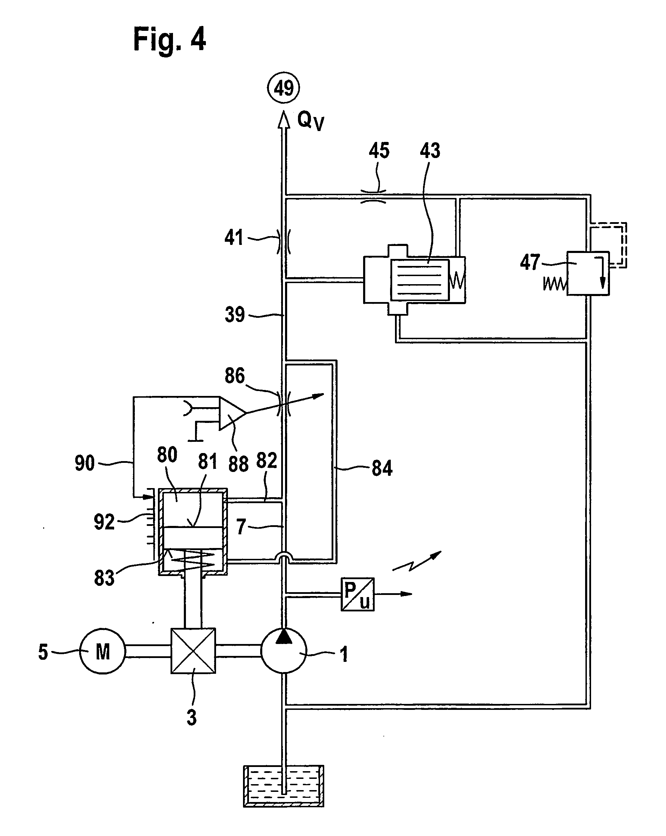

In Figur 4 ist ein weiteres Schaltbild für ein System des Hochtriebs dargestellt, bei welchem zunächst der Hydromotor 60 aus Figur 3 durch einen doppelt wirkenden Verstellzylinder 80 ersetzt wird. Der Verstellzylinder 80 ist mit seiner großen Kolbenfläche 81 über die Verbindung 82 mit der Pumpenausgangsleitung 7 verbunden, während eine kleinere Ringfläche 83 über eine Verbindung 84 mit dem Leitungsabschnitt 39 vor dem Stromregelventil 41, 43, aber hinter einer Verstelldrossel 86 verbunden ist, die über eine elektronische Regeleinrichtung 88 wieder eine entsprechende Druckdifferenz am Verstellzylinder 80 ermöglicht. Es kann aber auch ein Verstellzylinder mit zwei gleich großen Flächen zur Anwendung kommen. Es ist sogar vorteilhaft, wenn die Ringfläche auf der Rückseite des Kolbens gleich der Vorderseite ist, da dadurch die Menge vom Zylinder nicht "geschluckt" wird, also keine negativen Auswirkungen bzgl. Lenkungsverhalten aufgrund unzureichender Menge zu erwarten ist. Zusätzlich weist der Verstellzylinder 80 eine Sensoreinrichtung 92 auf, mit der beispielsweise der Hub des Zylinders 80 sensiert werden kann, welche also ein entsprechendes Wegsignal 90 an die elektronische Regeleinrichtung 88 abgeben kann. Mit dieser Wegsensorrückführung 90 ist damit der Betrieb eines geschlossenen Regelkreises möglich, welcher den Zylinder 80 in einer bestimmten Position hält, so dass das Getriebeübersetzungsverhältnis des Hochtriebes 3 über diese Regeleinrichtung stufenlos eingestellt werden kann. Ein entsprechender Regelkreis wäre allerdings auch genauso gut in Figur 3 am Hydraulikmotor 60 durch entsprechende Drehzahlsensoren am Getriebeausgang bzw. Drehzahl- oder Drehwinkelsensoren am Hydraulikmotor 60 vorstellbar. Alle weiteren Funktionen entsprechen den Funktionen, welche schon in Figur 3 vorgestellt wurden.

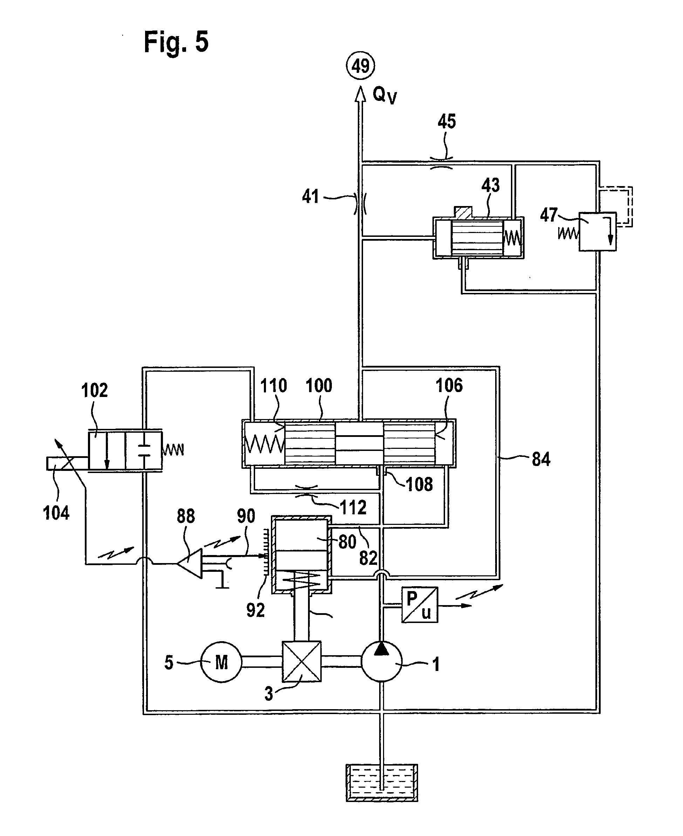

In Figur 5 ist im Gegensatz zu Figur 4 die in Figur 4 schematisch dargestellte Verstelldrossel 86 durch eine vorgesteuerte Drosseleinrichtung ersetzt worden, welche aus einer Hauptstufe 100 und einer Vorsteuerstufe 102 besteht. Durch Verwendung einer kleineren Vorsteuerstufe 102 ist es möglich, mit einem Verstellmagneten 104 geringerer Leistung eine Hauptstufe 100 für große Volumenströme vorzusteuem, ohne dass man entsprechend große Ventile über große Magneten betätigen muss. Die Hauptstufe 100 ist dazu mit einer Kolbenfläche 106 mit dem Druck in der Leitung 82 bzw. 7 vor der eigentlichen Drosselstelle 108 der Hauptstufe beaufschlagt, während eine Federraumkolbenfläche 110 über eine Vorsteuerdrossel 112 mit dem Druck in der Leitung 82 verbunden ist. Beim Öffnen der Vorsteuerstufe 102 fällt somit der Druck im Federraum an der Fläche 110 durch die Drossel 112 ab und ermöglicht somit auch ein Öffnen der Hauptstufe. Die Drosseleinrichtung wird also als klassische Druckwaage 100 mittels eines Vorsteuerventils 102 vorgesteuert, wobei ein Öffnen des Vorsteuerventils 102 an einer Vorsteuerdrossel 112 den Druck abfallen lässt und dadurch die Hauptdrossel 100 durch den höheren Druck auf der Kolbenseite 106 gegenüber dem niedrigeren Druck auf der Kolbenseite 110 die Drosselstelle 108 verkleinert. Alle anderen Funktionen sind in den vorherigen Figuren beschrieben. Zusätzlich kann am Druckraum 106 mit einer Vorsteuerdrossel (hier nicht dargestellt) und mit einem zusätzlichen Druckbegrenzungspiloten (wie der Pilot 47 in Figur 1) eine Druckbegrenzungsfunktion gemeinsam mit dem Stromregler mit den Elementen 41, 43, 45, 47 realisiert werden.

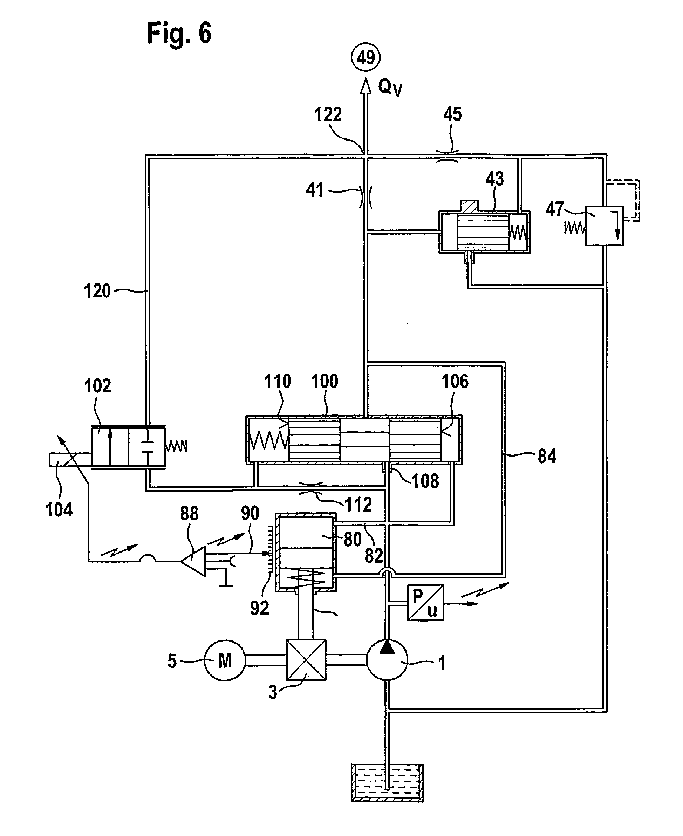

Die Schaltung in Figur 6 unterscheidet sich zu der Schaltung in Figur 5 dadurch, dass der Rücklauf des Vorsteuerventils 102 nicht in den Tank, sondern zum Lenkgetriebe geführt wird, also hinter der Hauptstromdrossel 41 wieder einmündet. Dazu wird die Rücklaufleitung 120 in den Knotenpunkt 122 hinter der Hauptstromdrossel 41 zurückgeführt. Diese Schaltung hat zwei Vorteile: Zum einen ändert sich der Druck über das Ventil 102 nicht in einem so großen Bereich, was die Regelung einfacher macht. Zum zweiten wird die Menge zum Verbraucher 49 (das Lenkgetriebe) geschickt und nicht in den Tank gefördert, was u. U. positiv für das Lenkgefühl ist.

In allen, in den Darstellungen aufgeführten elektrischen Steuergeräten, kann bei Bedarf abhängig von verschiedenen Fahrzustandsgrößen, wie zum Beispiel Drehzahl des Verbrennungsmotors, Lenkwinkelgeschwindigkeit der Lenkung, Übersetzung des Lenkgetriebes oder Fahrgeschwindigkeit des Kraftfahrzeuges, die Verstellung des Übersetzungsgetriebes entsprechend beeinflusst werden, so dass die Übersetzung des Hochtriebs verstellt und die Drehzahl der Pumpe 1 relativ zur Drehzahl des Antriebsmotors 5, in der Regel eines Verbrennungsmotors, verändert werden kann. Vorteilhaft bei den Varianten, bei denen eine Reihenschaltung des hydraulischen Systems des Hochtriebs 3 zum Lenkhilfesystem 49 vorgesehen ist, ist, dass über die Verstelldrosseln 68, 86, 100 die Leistung des hydraulischen Verstellgliedes, wie Motor 60 oder Zylinder 80, unabhängig vom Systemdruck des Lenkhilfesystems 49 gesteuert werden kann. Bei einer zusätzlichen Verwendung eines Winkel- oder Wegsensors 92 oder Drehzahlsensors in dem hydraulischen Verstellmechanismus des Hochtriebes, kann die Position des Kolbens 81 oder des Hydromotors 60 und damit die Übersetzung des Hochtriebes als Eingangsgröße des Steuergerätes 88 genutzt werden. Damit ist es möglich, die Übersetzung des Hochtriebs zu regeln. Das gilt prinzipiell für alle hier vorgestellten Schaltungen. Ein entscheidender Vorteil der hier vorgestellten Systeme ist auch gegenüber bekannten elektrischen Systemen, dass die elektrischen Systeme langsam sind, große Stellglieder benötigen und das Bordnetz stark belasten.

### Bezugszeichenliste

- 1: Lenkhelfpumpe
- 3: hydraulisch veränderbares Übersetzungsgetriebe
- 5: Antriebsmotor (Verbrennungsmotor)
- 7: Verbindungsleitung
- 9: Ventileinrichtung
- 11: Betätigungsmagnet
- 13: elektronischer Regler
- 15: Leitung zum Hydrozylinder
- 17: Hydrozylinder
- 19: Kolben des Hydrozylinders
- 21: Große Kolbenfläche des Hydrozylinders
- 23: kleine Kolbenringfläche des Hydrozylinders
- 27: Rückstellfeder des Hydrozylinders
- 29: Leitung von der kleinen Ringfläche 27 zum Tank 31
- 31: Tank
- 33: Verbindungsstange zum Hochtrieb
- 35: Feder des Ventils 9
- 37: Verbindungsleitung vom Ventil 9 zum Tank 31
- 39: weiterführende Leitung zum Lenkhilfesystem 49
- 41: Hauptstromdrossel
- 43: Druckwaage
- 45: Vorsteuerdrossel
- 47: Druckbegrenzungspilot
- 49: Servolenkung, Lenkhilfesystem
- 51: Regelventil
- 53: Bypasskanal
- 60: Hydromotor
- 62: Verbindungsleitung zum Hydromotor
- 64: verstellbare Drossel
- 66: zweite Verbindungsleitung zum Hydromotor
- 68: Steuerelektronik
- 70: Drucksensor
- 80: Verstellzylinder
- 81: große Kolbenfläche
- 82: Verbindungsleitung der großen Kolbenfläche
- 83: kleinere Kolbenringfläche
- 84: Verbindungsleitung der kleineren Kolbenringfläche
- 86: Verstelldrossel
- 88: elektronische Regeleinrichtung
- 90: Wegsignal
- 92: Sensoreinrichtung
- 100: Hauptstufe der vorgesteuerten Drossel
- 102: Vorsteuerstufe der vorgesteuerten Drossel
- 104: Verstellmagnet der Vorsteuerstufe
- 106: Kolbenfläche der Hauptstufe
- 108: Drosselstelle der Hauptstufe
- 110: Federraum Kolbenfläche der Hauptstufe
- 112: Vorsteuerdrossel
- 120: Rückführleitung des Ventils 102
- 122: Leitungseinmündung (Knotenpunkt)

## Patentansprüche

1. Hydraulisches Lenkhilfesystem für Kraftfahrzeuge mit einer Lenkhelfpumpe (1) und mit einem veränderbaren Übersetzungsgetriebe (3) zwischen einem Antriebsmotor (5) und der Lenkhelfpumpe (1), insbesondere einem Hochtrieb für die Lenkhelfpumpe (1), wobei die Lenkhelfpumpe (1) das hydraulische Lenkhilfesystem (49) mit hydraulischer Leistung versorgt, **dadurch gekennzeichnet, dass** die Lenkhelfpumpe (1) auch ein hydraulisches System des Übersetzungsgetriebes (3) mit hydraulischer Leistung versorgt.

2. Hydraulisches Lenkhilfesystem nach Anspruch 1, **dadurch gekennzeichnet, dass** das hydraulische System des Übersetzungsgetriebes (3) zwischen der Lenkhelfpumpe (1) und einer Stromregelventileinrichtung (41, 43) für das Lenkhilfesystem (49) hydraulisch angeschlossen ist.

3. Hydraulisches Lenkhilfesystem nach Anspruch 1 oder Anspruch 2, **dadurch gekennzeichnet, dass** das hydraulische System des Übersetzungsgetriebes (3) mindestens eine Steuer-, Schalt- oder Regeleinrichtung, insbesondere ein Ventil (9, 51) oder eine Drossel (64. 86, 100), und eine hydraulische Verstelleinrichtung, insbesondere einen Hydraulikmotor (60) oder einen Zylinder (17, 80) aufweist.

4. Hydraulisches Lenkhilfesystem nach Anspruch 3, **dadurch gekennzeichnet, dass** der Zylinder einfach (17) oder doppelt (80) wirkend ausgeführt sein kann.

5. Hydraulisches Lenkhilfesystem nach Anspruch 3 oder Anspruch 4, **dadurch gekennzeichnet, dass** zusätzlich ein Positions- oder Drehzahlsensor (92) für die hydraulische Verstelleinrichtung (80) vorgesehen ist.

6. Hydraulisches Lenkhilfesystem nach Anspruch 3 oder Anspruch 4 oder Anspruch 5, **dadurch gekennzeichnet, dass** eine elektronische Regeleinrichtung (13, 68, 88) für die Steuer-, Schalt- oder Regeleinrichtung (9, 51 64, 86, 100) vorgesehen ist.

7. Hydraulisches Lenkhilfesystem nach einem der vorhergehenden Ansprüche, **dadurch gekennzeichnet, dass** das hydraulische System (17) des Übersetzungsgetriebes (3) (stromab der Lenkhelfpumpe (1)) parallel zum Lenkhilfesystem (49) geschaltet ist.

8. Hydraulisches Lenkhilfesystem nach Anspruch 7, **dadurch gekennzeichnet, dass** die Steuer-, Schalt- oder Regeleinrichtung (9) im Hauptstrom (7) der Lenkhelfpumpe (1) angeordnet ist.

9. Hydraulisches Lenkhilfesystem nach Anspruch 7, **dadurch gekennzeichnet, dass** die Steuer-, Schalt- oder Regeleinrichtung (51) in einem Bypassstrom (53), das heißt in einem abgezweigten Nebenstrom der Lenkhelfpumpe (1) angeordnet ist.

10. Hydraulisches Lenkhilfesystem nach einem der vorhergehenden Ansprüche, **dadurch gekennzeichnet, dass** das hydraulische System (60, 80) des Übersetzungsgetriebes (3) stromab der Lenkhelfpumpe (1) in Reihe mit dem Lenkhilfesystem (49) geschaltet ist.

11. Hydraulisches Lenkhilfesystem nach Anspruch 10, **dadurch gekennzeichnet, dass** stromauf vor der Steuer-, Schalt- oder Regeleinrichtung (64, 86, 100) ein Drucksensor (70) angeordnet ist.

12. Hydraulisches Lenkhilfesystem nach einem der vorhergehenden Ansprüche, **dadurch gekennzeichnet, dass** die hydraulische Verstelleinrichtung (17, 80) durch entsprechende Kräfte, insbesondere drucklos durch Kräfte einer Feder (27) oder durch unterschiedlich große Druckwirkflächen (81, 82) bei Beaufschlagung mit dem gleichen Druck, sich auf eine minimale Drehzahl des Übersetzungsgetriebes zurückstellt.

13. Hydraulisches Lenkhilfesystem nach einem der vorhergehenden Ansprüche, **dadurch gekennzeichnet, dass** das Übersetzungsgetriebe (3) einen Hochtrieb darstellt, der bei niedriger Drehzahl des Verbrennungsmotors (5) die Drehzahl der Lenkhelfpumpe (1) heraufsetzt und umgekehrt bei hoher Drehzahl des Verbrennungsmotors (5) die Drehzahl der Lenkhelfpumpe (1) herabsetzt, vorzugsweise auf die gleiche Drehzahl wie die des Verbrennungsmotors (5).

14. Hydraulisches Lenkhilfesystem nach einem der vorhergehenden Ansprüche, **dadurch gekennzeichnet, dass** die Steuer-, Schalt- oder Regeleinrichtung (100) vorgesteuert ist.

15. Hydraulisches Lenkhilfesystem nach einem der vorhergehenden Ansprüche, **dadurch gekennzeichnet, dass** die elektronische Regeleinrichtung (13, 68, 88) zusätzliche Signale oder Fahrzustandsgrößen, wie z. B. Drehzahl und/oder Lenkwinkelgeschwindigkeit und/oder Übersetzung des Lenkgetriebes und/oder Fahrgeschwindigkeit berücksichtigt bzw. auswertet.

16. Hydraulisches Lenkhilfesystem nach einem der vorhergehenden Ansprüche, **dadurch gekennzeichnet, dass** bei Reihenschaltung des Lenkhilfesystems (49) und der hydraulischen Verstelleinrichtung (66, 80) des Übersetzungsgetriebes (3) die Steuer-, Schalt- oder Regeleinrichtung (68, 86, 100) parallel zur Verstelleinrichtung (60, 80) geschaltet ist.

## Claims

1. Hydraulic steering boost system for motor vehicles with a power steering pump (1) and a variable transmission gearing (3) between a drive motor (5) and the power steering pump (1), more particularly a boost drive for the power steering pump (1), wherein the power steering pump (1) supplies the hydraulic steering boost system (49) with hydraulic power **characterised in that** the power steering pump (1) also supplies a hydraulic system of the transmission gearing (3) with hydraulic power.

2. Hydraulic steering boost system according to claim 1 **characterised in that** the hydraulic system of the transmission gearing (3) is hydraulically connected in between the power steering pump (1) and a flow regulating valve device (41, 43) for the steering boost system (49).

3. Hydraulic steering boost system according to claim 1 or claim 2 **characterised in that** the hydraulic system of the transmission gearing (3) has at least one control, switching or regulating device, more particularly a valve (9, 51) or a throttle (64, 86, 100), and a hydraulic adjusting device, more particularly a hydraulic motor (60) or a cylinder (17, 80).

4. Hydraulic steering boost system according to claim 3 **characterised in that** the cylinder can be designed as single-acting (17)or double-acting (80).

5. Hydraulic steering boost system according to claim 3 or claim 4 **characterised in that** in addition a position or speed sensor (92) is provided for the hydraulic adjusting device (80).

6. Hydraulic steering boost system according to claim 3 or claim 4 or claim 5 **characterised in that** an electronic regulating device (13, 68, 88) is provided for the control, switching or regulating device (9, 51, 64, 86, 100).

7. Hydraulic steering boost system according to one of the preceding claims **characterised in that** the hydraulic system (17) of the transmission gearing (3) is switched in (downstream of the power steering pump (1)) parallel to the steering boost system (49).

8. Hydraulic steering boost system according to claim 7 **characterised in that** the control, switching or regulating device (9) is mounted in the main stream (7) of the power steering pump (1).

9. Hydraulic steering boost system according to claim 7 **characterised in that** the control, switching or regulating device (51) is mounted in a bypass stream (53), that is in a secondary branch stream of the power steering pump (1).

10. Hydraulic steering boost system according to one of the preceding claims **characterised in that** the hydraulic system (60, 80) of the transmission gearing (3) is connected in downstream of the power steering pump (1) in series with the steering boost system (49).

11. Hydraulic steering boost system according to claim 10 **characterised in that** a pressure sensor (70) is mounted upstream in front of the control, switching or regulating device (64, 86, 100).

12. Hydraulic steering boost system according to one of the preceding claims **characterised in that** the hydraulic adjusting device (17, 80) is set back to a minimum speed of the transmission gearing through corresponding forces, more particularly pressure-less through forces of a spring (27) or through different sized active pressure faces (81, 82) in the event of being loaded with the same pressure.

13. Hydraulic steering boost system according to one of the preceding claims **characterised in that** the transmission gearing (3) represents a boost drive which with a lower speed of the internal combustion engine (5) steps up the speed of the power steering pump (1) and conversely with a high speed of the internal combustion engine lowers the speed of the power steering pump (1) preferably to the same speed as that of the internal combustion engine (5).

14. Hydraulic steering boost system according to one of the preceding claims **characterised in that** the control, switching or regulating device (100) is pre-controlled.

15. Hydraulic steering boost system according to one of the preceding claims **characterised in that** the electronic regulating device (13, 68, 88) takes into account and evaluates additional signals or drive parameters such for example speed and/or steering angle speed and/or translation ratio of the steering gear and/or driving speed.

16. Hydraulic steering boost system according to one of the preceding claims **characterised in that** with a series connection of the steering boost system (49) and the hydraulic adjusting device (66, 80) of the transmission gearing (3) the control, switching or regulating device (68, 86, 100) is switched in parallel to the adjusting device (60, 80).

## Revendications

1. Système d'assistance de direction hydraulique pour véhicules automobiles avec une pompe d'assistance de direction (1) et avec un engrenage (3) modifiable entre un moteur d'entraînement (5) et la pompe d'assistance de direction (1), notamment un engrenage multiplicateur pour la pompe d'assistance de direction (1), la pompe d'assistance de direction (1) alimentant le système d'assistance de direction (49) hydraulique en puissance hydraulique, **caractérisé en ce que** la pompe d'assistance de direction (1) alimente également un système hydraulique d'engrenage (3) en puissance hydraulique.

2. Système d'assistance de direction hydraulique selon la revendication 1, **caractérisé en ce que** le système hydraulique de l'engrenage (3) est raccordé hydrauliquement entre la pompe d'assistance de direction (1) et un dispositif de régulation de débit (41, 43) pour le système d'assistance de direction (49).

3. Système d'assistance de direction hydraulique selon la revendication 1 ou 2, **caractérisé en ce que** le système hydraulique de l'engrenage (3) présente au moins un dispositif de commande, de commutation ou de régulation, notamment une soupape (9, 51) ou un réducteur de débit (64, 86, 100), et un dispositif de réglage hydraulique, notamment un moteur hydraulique (60) ou un vérin (17, 80).

4. Système d'assistance de direction hydraulique selon la revendication 3, **caractérisé en ce que** le vérin peut être réalisé à simple (17) ou double (80) action.

5. Système d'assistance de direction hydraulique selon la revendication 3 ou 4, **caractérisé en ce qu'**en outre, un capteur de position ou de vitesse de rotation (92) est prévu pour le dispositif de réglage (80) hydraulique.

6. Système d'assistance de direction hydraulique selon la revendication 3, 4 ou 5, **caractérisé en ce qu'**un dispositif de régulation (13, 68, 98) électronique est prévu pour le dispositif de commande, de commutation ou de régulation (9, 51, 64, 86, 100).

7. Système d'assistance de direction hydraulique selon l'une quelconque des revendications précédentes, **caractérisé en ce que** le système hydraulique (17) de l'engrenage (3) est monté (en aval de la pompe d'assistance de direction (1)) en parallèle du système d'assistance de direction (49).

8. Système d'assistance de direction hydraulique selon la revendication 7, **caractérisé en ce que** le dispositif de commande, de commutation ou de régulation (9) est disposé dans le circuit principal (7) de la pompe d'assistance de direction (1).

9. Système d'assistance de direction hydraulique selon la revendication 7, **caractérisé en ce que** le dispositif de commande, de commutation ou de régulation (51) est disposé dans un circuit de dérivation (53), c'est-à-dire dans un circuit secondaire dérivé de la pompe d'assistance de direction (1).

10. Système d'assistance de direction hydraulique selon l'une quelconque des revendications précédentes, **caractérisé en ce que** le système hydraulique (60, 80) de l'engrenage (3) est monté en aval de la pompe d'assistance de direction (1), en série avec le système d'assistance de direction (49).

11. Système d'assistance de direction hydraulique selon la revendication 10, **caractérisé en ce qu'**un capteur de pression (70) est disposé en amont avant le dispositif de commande, de commutation ou de régulation (64, 86, 100).

12. Système d'assistance de direction hydraulique selon l'une quelconque des revendications précédentes, **caractérisé en ce que** le dispositif de réglage hydraulique (17, 80) se réinitialise à une vitesse de rotation minimale de l'engrenage en raison de forces correspondantes, notamment sans pression en raison de forces d'un ressort (27) ou en raison de surfaces actives de pression (81, 82) de grandeur différente lors de la sollicitation en pression identique.

13. Système d'assistance de direction hydraulique selon l'une quelconque des revendications précédentes, **caractérisé en ce que** l'engrenage (3) représente un engrenage multiplicateur qui augmente la vitesse de rotation de la pompe d'assistance de direction (1) lorsque la vitesse de rotation du moteur à combustion interne (5) est basse et à l'inverse, réduit la vitesse de rotation de la pompe d'assistance de direction (1) lorsque la vitesse de rotation du moteur à combustion interne (5) est élevée, de préférence à la même vitesse de rotation que celle du moteur à combustion interne (5).

14. Système d'assistance de direction hydraulique selon l'une quelconque des revendications précédentes, **caractérisé en ce que** le dispositif de commande, de commutation ou de régulation (100) est préréglé.

15. Système d'assistance de direction hydraulique selon l'une quelconque des revendications précédentes, **caractérisé en ce que** le dispositif de régulation électronique (13, 68, 88) prend en considération ou évalue des signaux supplémentaires ou des variables d'état de marche comme par exemple la vitesse de rotation et/ou la vitesse angulaire de direction et/ou la transmission du mécanisme de direction et/ou la vitesse de marche.

16. Système d'assistance de direction hydraulique selon l'une quelconque des revendications précédentes, **caractérisé en ce que** lors du montage en série du système d'assistance de direction (49) et du dispositif de réglage hydraulique (66, 80) de l'engrenage, le dispositif de commande, de commutation ou de régulation (68, 86, 100) est monté en parallèle du dispositif de réglage (60, 80).
